# EUROPÄISCHE PATENTANMELDUNG

(11) **EP 1 449 991 A2**
(43) Veröffentlichungstag der Anmeldung: **25.08.2004**
(21) Anmeldenummer: 03028195.0
(22) Anmeldetag: 09.12.2003
(51) Int. Cl.: E05B 65/12, E05C 3/24, E05B 15/02, B60R 7/06

(54) **Verschlusseinrichtung für ein durch eine Klappe verschliessbares Fach, insbesondere Handschuhfach, eines Kraftfahrzeugs**

(30) Priorität: 22.02.2003 DE 10307626
(71) Anmelder: DaimlerChrysler AG, 70567 Stuttgart (DE)
(72) Erfinder: Hülswitt, Matthias, 70794 Filderstadt (DE)

(57) **Zusammenfassung**

Eine Verschlusseinrichtung für ein durch eine Klappe (1) verschließbares Fach, insbesondere Handschuhfach (2), in Kraftfahrzeugen mit einer Falle (4) und einem Schließbügel (5) soll gegen ein ungewolltes, crashbedingtes Lösen gesichert werden.

Zu diesem Zweck sind der Schließbügel (5) und/oder die Falle (4) derart gelagert, dass bei einer normalen Betätigung der Verschlusseinrichtung beide Teile eine feste Zuordnung zueinander besitzen, sich jedoch bei einer crashbedingten Lösekraft, die ein ungewolltes Öffnen bewirken würde, Löseenergie verzehrend gegeneinander verformen beziehungsweise verlagern können, um hierdurch eine Verschlusssicherung zu bewirken.

## Beschreibung

Die Erfindung betrifft eine Verschlusseinrichtung für ein durch eine Klappe verschließbares Fach, insbesondere Handschuhfach, in Kraftfahrzeugen mit einer Falle und einem Schließbügel.

Derart verschließbare Fächer sollen in bestimmten Belastungsfällen sicher verschlossen bleiben. Solche Belastungsfälle können beispielsweise bei Klappen von Handschuhfächern in Kraftfahrzeugen auftreten, wenn in dem gleichen Einbauteil wie diese Handschuhfächer ein Airbag eingebaut ist und dieser bei einem Fahrzeugunfall auslöst. Für solche Belastungsfälle sehen im Stand der Technik bekannte Lösungen aus beispielsweise DE 199 06 049 A1 und DE 197 36 561 A1 jeweils eine über Sensoren ausgelöste, motorisch betätigte Notverriegelung der Verschlusseinrichtung vor. Diese Sicherheitslösungen sind einrichtungsmäßig kompliziert und aufwändig und damit mit relativ hohen Kosten verbunden.

Die Erfindung beschäftigt sich mit dem Problem, für die oben beschriebenen, besonderen Belastungsfälle eine Verschlusseinrichtung zu schaffen, bei der mit einfachen Mitteln ein ungewolltes Öffnen verhindert werden kann.

Gelöst wird dieses Problem in erster Linie durch eine Ausbildung einer gattungsgemäßen Verschlusseinrichtung nach den kennzeichnenden Merkmalen des Patentanspruchs 1.

Zweckmäßige und vorteilhafte Ausgestaltungen sind Gegenstand der Unteransprüche und werden bei der Beschreibung gezeichneter Ausführungsbeispiele noch näher erläutert werden.

Die Erfindung beruht auf dem allgemeinen Gedanken, zumindest eines der beiden bei der gattungsgemäßen Verschlusseinrichtung ineinander greifenden Teile, nämlich Falle und Schließbügel derart nachgiebig zu formen oder zu lagern, dass bei einer Verformung des Schließfachs, wie sie bei einem Handschuhfach eines Kraftfahrzeuges beispielsweise bei dem Auslösen eines über dem Handschuhfach angebrachten Airbags erfolgt, eine gewisse Löseenergie verzehrende Verformung und/oder Verschiebung in zumindest einer der Halterungen der Falle oder des Schließbügels erfolgen kann. Aus baulichen Gründen bietet es sich an, diese Verform- und/oder Verschiebbarkeit bei einem an dem Schließfach befestigten Schließbügel vorzusehen. Theoretisch abstrahierend lässt sich die Realisierung der Erfindung dadurch vorstellen, dass zumindest eines der Teile, nämlich Schließbügel oder Falle durch ein elastisches Spannband mit äußerst hoher Spannkraft gehalten ist. Die Spannkraft ist derart ausgelegt, dass bei normalem Gebrauch des Schließfaches die entsprechend gelagerte Falle bzw. der Schließbügel sich wie starr und fest gelagert verhält. Wirkt jedoch in einem besonders hohen, außergewöhnlichen Belastungsfall, wie er bei dem Auslösen eines Airbags erfolgen kann, eine Lösekraft auf den Verbund von Falle und Schließkraft ein, so dehnt sich das betreffende Spannmittel. Dadurch kann ein sicherer Verschluss erhalten bleiben und zwar insbesondere dadurch bedingt, dass auf den Verschluss einwirkende Löseenergie verschlusssichernd verzehrt wird. Diese Löseenergieverzehrung kann durch Umwandlung in potentielle Federenergie elastischer Haltemittel von Falle und/oder Schließbügel umgewandelt werden oder durch Reibungsverluste bei einer Lagerung der Haltemittel in beispielsweise einer Rutschkupplung erfolgen.

Bei den konkret in den Unteransprüchen wiedergegebenen konstruktiven Lösungen wird jeweils in einer besonders einfachen Weise von dem vorgenannten, der Erfindung zugrunde liegenden allgemeinen Erfindungsgedanken Gebrauch gemacht. Bei diesen Lösungen ist insbesondere berücksichtigt, dass besonders konstruktiv aufwändige und damit teure Lösungen bei Kraftfahrzeug-Serienfahrzeugen aus Wettbewerbsgründen nicht realisierbar sind.

Ein Öffnen des Handschuhfaches eines Kraftfahrzeuges muss bei Anordnung eines Airbags oberhalb des Handschuhfaches insbesondere deshalb sicher vermieden werden, weil bei einem Öffnen die Entfaltung des Beifahrer-Airbags unzulässig behindert werden könnte.

Zwei Beispiele für besonders einfache, vorteilhafte und dennoch sichere Verschlusseinrichtungen nach der Erfindung sind in der Zeichnung dargestellt.

In dieser zeigen
- Fig. 1: einen Schnitt durch eine Verschlusseinrichtung eines Kraftfahrzeug-Handschuhfaches längs einer z-Achse mit einer Ansicht in Richtung einer y-Achse des Fahrzeuges,
- Fig. 2: einen Schnitt durch die Verschlusseinrichtung nach Linie II-II in Fig. 1,
- Fig. 3: eine Ansicht auf die Verschlusseinrichtung nach Fig. 1 von unten,
- Fig. 4: eine Ansicht wie in Fig. 2 für eine alternative Ausführung.

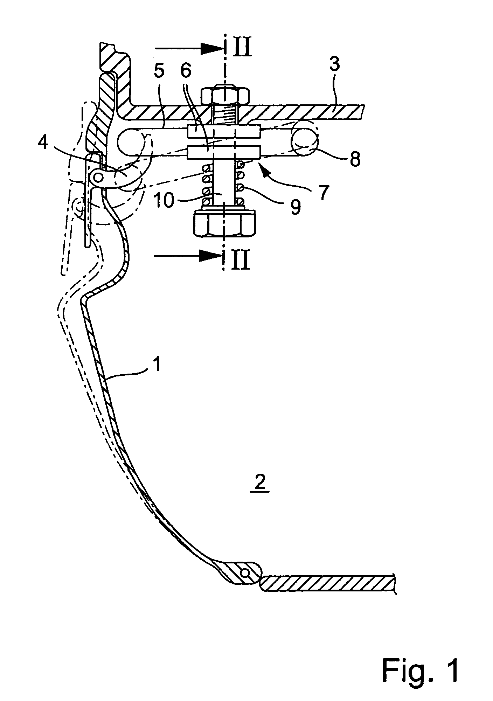

### Ausführung nach Fig. 1 bis 3

Eine um eine horizontale Achse entsprechend dem Pfeil F schwenkbare Klappe 1 verschließt in geschlossenem Zustand ein Handschuhfach 2 eines Kraftfahrzeuges, von dem in der Zeichnung lediglich der obere Wandbereich 3 dargestellt ist.

Für das Schließen und Öffnen des Handschuhfaches 2 ist eine Verschlusseinrichtung mit einer Falle 4 an der Klappe 1 und einem Schließbügel 5 am oberen Randbereich 3 des Handschuhfaches 2 vorgesehen. Die Falle 4 kann auch als Kralle und der Schließbügel 5 als Fanghaken bezeichnet werden. Die Falle 4 ist zum Schließen und Öffnen über ein an der Klappe 1 vorgesehenes Betätigungselement betätigbar.

Der Schließbügel 5 ist derart gelagert, dass er sich bei einer Betätigung der Klappe 1 unter normalen Betriebsbedingungen als starr gelagert verhält. Der Schließbügel 5 besteht dabei selbst ebenfalls aus einem im wesentlichen starren Material.

Um im erfindungsgemäßen Sinne mit Bezug auf die Verschlusseinrichtung Löseenergie verzehrend wirken zu können, ist folgende spezielle Halterung des Schließbügels 5 vorgesehen.

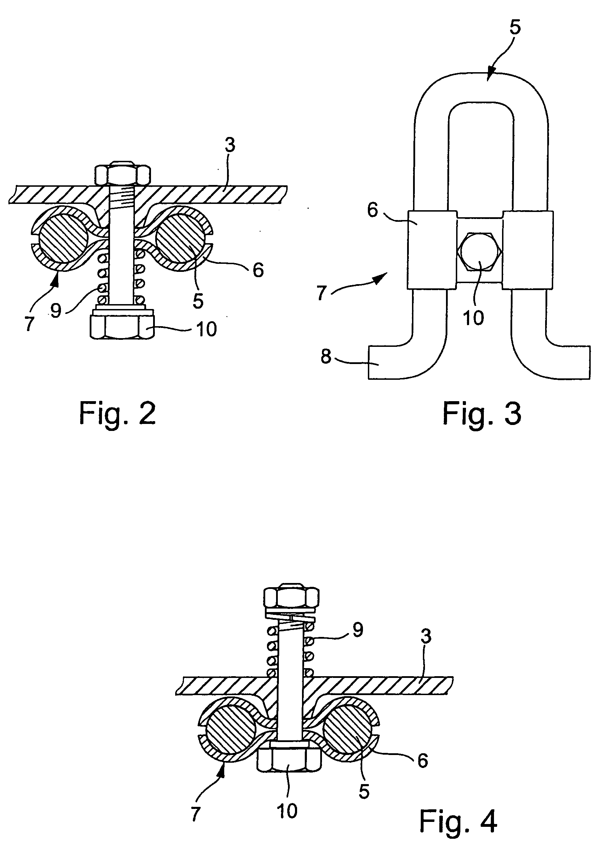

Wie am besten aus Fig. 3 zu sehen ist, besitzt der Schließbügel 5 eine U-Form und ist über seine U-Schenkel zwischen zwei Klemmschalen 6 einer Rutschkupplung 7 gehalten. Die Zuordnung zwischen Schließbügel 5 und Rutschkupplung 7 ist derart, dass bei einer Lösekraft, die bei der Verschlusseinrichtung ein ungewolltes Öffnen auslösen könnte, der Schließbügel 5 etwa tangential zu dem Kreisbogen, auf dem sich die Falle 4 bei einem Öffnen der Klappe 1 bewegt, mit hoher Löseenergie verzehrender Reibung durch die Rutschkupplung 7 hindurchgezogen wird (Fig. 1). Der Weg für diese Bewegung, das heißt das Verschieben in der Rutschkupplung 7 ist begrenzt, wozu an den jeweils freien Enden der U-Schenkel des Schließbügels 5 Anschläge 8 (Fig. 3) ausgebildet sind. Die Haltekraft der Rutschkupplung 7, die auch als Reibungskupplung bezeichnet werden kann, erzeugt eine Druckfeder 9, die sich an einer Schraube 10 als Widerlager abstützt. Mit dieser Schraube 10 ist die Rutschkupplung an dem oberen Wandbereich 3 des Handschuhfaches 2 gelagert. Diese Lagerung ist derart, dass der Schaft der Schraube 10 die Klemmschalen 6 der Rutschkupplung 7 durchgreift. Die Schraube 10 besitzt an ihrem einen Ende einen Schraubenkopf und ist an ihrem anderen Ende mit einer Mutter belegt. Ausgerichtet ist die Achse der Schraube 10 bei dem Handschuhfach in z-Richtung des Fahrzeuges, in dem das Handschuhfach 2 angeordnet ist. Bei dem Ausführungsbeispiel nach Fig. 1, 2 stützt sich die Rutschkupplung 7 an dem oberen Wandbereich 3 des Handschuhfaches 2 ab. Gegen dieses Widerlager wird die Rutschkupplung 7 durch die Druckfeder 9, die sich an dem innerhalb des Handschuhfaches 2 liegenden Ende der Schraube 10 abstützt, angepresst. Die Höhe der Federkraft ist derart ausgelegt, dass mit Bezug auf einen Normalbetrieb der Klappe 1 eine praktisch starre Lagerung des Schließbügels 5 gegeben ist.

Die vorstehend beschriebene Art der Lagerung des Schließbügels 5 an der Schraube 10 mit der sich an dieser abstützenden Druckfeder 9 hat insbesondere folgenden Vorteil. Die Rutschkupplung 7 kann sich als Ganzes zusammen mit dem Schließbügel 5 bei starken crashbedingten Verformungen zwischen den Wänden des Handschuhfaches 2 und der Klappe 1, die zu einem ungewollten Öffnen der Klappe 1 führen könnten, in Richtung der z-Achse des Fahrzeuges längs der Schraube 10 zum Inneren des Handschuhfaches 2 hin bewegen. Dabei kann die Rutschkupplung 7 mit dem Schließbügel 5 eine leichte Schwenkbewegung ausüben, wodurch der Anlenkungsbereich des Schließbügels 5 an die Falle 4 der Kreisbogenbewegung bei einer sich öffnenden Klappe 1 folgen kann. Die Klemmwirkung der Rutschkupplung 7 kann so ausgelegt sein, dass bis zu einer bestimmten, vorgebbaren Grenzlösekraft zunächst lediglich ein federbelastetes Verschwenken der Rutschkupplung 7 erfolgt, ohne dass schon eine Bewegung des Schließbügels 5 innerhalb der Rutschkupplung 7 erfolgt. Dies bedeutet, dass in einem solchen Fall die Lösesicherungs-Halterung zweistufig anspricht und zwar zunächst durch ein gegen die Kraft der Druckfeder 9 erfolgendes Verschwenken der Rutschkupplung 7 in der ersten Stufe und aktiver Rutschkupplung 7 in der zweiten Stufe.

Eine Lage der Klappe 1 bei einem durch eine zu hohe Lösekraft gegen die Kraft der Feder 9 verschwenkten Schließbügel 5 ist in der Fig. 1 strichpunktiert angedeutet.

Zu ungewollten temporären Verformungen zwischen den Wänden des Handschuhfaches 2 und der Klappe 1 kann es insbesondere in Fällen kommen, in denen ein in der Nähe des Handschuhfaches angebrachter Airbag auslöst. Denn beim Auslösen eines Airbags werden erhebliche Kräfte freigesetzt, die zu kurzzeitigen Verformungen im benachbarten Umfeld führen. Bei einer gleichen Unterbringung des Airbags und des Handschuhfaches 2 in der Instrumententafel eines Kraftfahrzeuges erfolgen diese Verformungen damit insbesondere im Bereich der das Handschuhfach 2 umgebenden bzw. bildenden Instrumententafel.

### Ausführung nach Fig. 4

Die Ausführung nach Fig. 4 unterscheidet sich von der vorstehend beschriebenen Ausführung lediglich dadurch, dass die Druckfeder 9 an der Schraube 10 nicht innerhalb, sondern außerhalb des Handschuhfaches angeordnet ist. Auf die Funktion der den Klappenverschluss lösesichernden Halterung der Rutschkupplung 7 hat dies keinen Einfluss.

## Patentansprüche

1. Verschlusseinrichtung für ein durch eine Klappe verschließbares Fach, insbesondere Handschuhfach, in Kraftfahrzeugen mit einer Falle und einem Schließbügel,
**gekennzeichnet durch** die Merkmale,
- der Schließbügel (5) und/oder die Falle (4) sind an der Klappe (1) bzw. einer Wand (3) des Handschuhfaches (2) **durch** eine auf einen vorbestimmten Löseenergiegrenzwert ausgelegte Haltekraft gehalten,
- unterhalb des Löseenergiegrenzwertes gewährleistet die Haltekraft bei geschlossener Klappe (1) einen unnachgiebigen Halt von Falle (4) und Schließbügel (5) sowie deren Halterungen,
- bei einer auf die Verschlusseinrichtung oberhalb des Löseenergiegrenzwertes einwirkenden Lösekraft sind bei ungelöst bleibendem Formschluss zwischen Falle (4) und Schließbügel (5) zumindest Teilbereiche der Falle (4) beziehungsweise des Schließbügels (5) oder deren Halterungen Löseenergie absorbierend verform- und/oder verlagerbar.

2. Verschlusseinrichtung nach Anspruch 1,
**dadurch gekennzeichnet,**
**dass** die Verformung und/oder Verlagerung der betreffenden Teile reversibel ist.

3. Verschlusseinrichtung nach Anspruch 1 oder 2,
**dadurch gekennzeichnet,**
**dass** die Lösesicherungsenergie aus Federkraft resultiert.

4. Verschlusseinrichtung nach einem der vorhergehenden Ansprüche,
**dadurch gekennzeichnet,**
**dass** die Federkraft unter anderem die Schließkraft für eine ein Verlagern von verlagerbaren Teilen ermöglichende Rutschkupplung (7) erzeugt.

5. Verschlusseinrichtung nach einem der vorhergehenden Ansprüche,
**dadurch gekennzeichnet,**
**dass** der Schließbügel (5) als zumindest ein zur Lösesicherung verlagerbarer Teilbereich der Verschlusseinrichtung ausgebildet ist.

6. Verschlusseinrichtung nach einem der vorhergehenden Ansprüche,
**dadurch gekennzeichnet,**
**dass** die Rutschkupplung (7) in Richtung auf die Schwenkachse der Klappe (1) federnd gegenüber dem zu verschließenden Fach (2) gelagert ist.

7. Verschlusseinrichtung nach einem der vorhergehenden Ansprüche,
**dadurch gekennzeichnet,**
**dass** die Federkraft von einer Schrauben-Druckfeder (9) ausgeht.

8. Verschlusseinrichtung nach einem der vorhergehenden Ansprüche,
**dadurch gekennzeichnet,**
**dass** die Rutschkupplung (7) aus zwei den Schließbügel (5) zwischen sich einschließenden Klemmschalen (6) besteht,
die durch eine sich federnd an dem Handschuhfach (2) abstützende Schraube (10) verspannt sind.
